# EUROPÄISCHE PATENTANMELDUNG

(11) **EP 2 050 376 A2**
(43) Veröffentlichungstag der Anmeldung: **22.04.2009**
(21) Anmeldenummer: 08018313.0
(22) Anmeldetag: 20.10.2008
(51) Int. Cl.: A47J 42/38

(54) **Vorrichtung zum Zerkleinern von Lebensmitteln**

(30) Priorität: 18.10.2007 DE 102007050310; 09.11.2007 DE 102007053876
(71) Anmelder: Kaltenbach, Frank, 68259 Mannheim (DE)
(72) Erfinder: Kaltenbach, Frank, 68259 Mannheim (DE)
(74) Vertreter: Ullrich & Naumann

(57) **Zusammenfassung**

Vorrichtung zum Zerkleinern von Lebensmitteln, Gewürzen oder dgl., mit einem Gehäuse (1), einem in dem Gehäuse (1) ausgebildeten Speicher (2) zur Bereitstellung des zu zerkleinernden Guts, einem auf das Gut wirkenden Zerkleinerungswerk (3) und einem elektrischen Antrieb (4), gekennzeichnet durch einen Prozessor (8) zur Steuerung des Antriebs (4) und ggf. weiterer Funktionen bzw. Funktionseinheiten.

## Beschreibung

Die Erfindung betrifft eine Vorrichtung zum Zerkleinern von Lebensmitteln, Gewürzen oder dgl., mit einem Gehäuse, einem in dem Gehäuse ausgebildeten Speicher zur Bereitstellung des zu zerkleinernden Guts, einem auf das Gut wirkenden Zerkleinerungswerk und einem elektrischen Antrieb.

Vorrichtungen der gattungsbildenden Art sind in den unterschiedlichsten Ausführungen bekannt. Dazu sei lediglich beispielhaft auf die aus der Praxis bekannten Pfeffer- und Salzmühlen verwiesen. Solche Vorrichtungen gibt es in rein mechanischen oder elektromechanischen Ausführungen. Im Falle einer elektromechanischen Pfeffer- oder Salzmühle ist im Gehäuse, regelmäßig unterhalb des das Mahlgut aufnehmenden Speichers, ein besonderes Mahlwerk aus Edelstahl oder Keramik angeordnet, welches von einem elektrischen Antrieb drehangetrieben wird. Der elektrische Antrieb ist häufig oberhalb des Speichers angeordnet, wobei dieser über eine Welle mit dem Mahlwerk verbunden ist. Der Mahlvorgang wird entweder über einen Schalter bzw. Taster oder mittlerweile auch über einen Sensor ausgelöst.

Die aus der Praxis bekannten Vorrichtungen der gattungsbildenden Art sind jedoch insoweit problematisch, als sich der Antrieb für das zu zerkleinernde Gut lediglich ein- und ausschalten lässt, ohne dabei das Anlaufverhalten des Mahlwerks in Bezug auf das Gut oder die jeweilige Härte des zu zerkleinernden Guts oder die individuell erforderliche Drehgeschwindigkeit des Antriebs bzw. des Zerkleinerungswerks zu berücksichtigen. Folglich liefert die aus der Praxis bekannte Vorrichtung allenfalls in Bezug auf ein konkretes Mahlgut mit konkreter Härte und Körnung ein hinreichend gutes Mahlergebnis.

Der vorliegenden Erfindung liegt daher die Aufgabe zugrunde, eine Vorrichtung zum Zerkleinern von Lebensmitteln, Gewürzen oder dgl. der gattungsbildenden Art derart auszugestalten und weiterzubilden, dass eine optimale Anpassung auf das jeweilige Mahlgut möglich ist. Außerdem soll die Handhabung komfortabel, die Konstruktion einfach und die Fertigung kostengünstig sein.

Die voranstehende Aufgabe wird durch die Merkmale des Patentanspruchs 1 gelöst. Danach ist die gattungsbildende Vorrichtung zum Zerkleinern von Lebensmitteln, Gewürzen oder dgl. gekennzeichnet durch einen Prozessor zur Steuerung des Antriebs und ggf. weiterer Funktionen bzw. Funktionseinheiten.

Erfindungsgemäß ist erkannt worden, dass sich die gattungsbildende Vorrichtung zum universellen Einsatz in Bezug auf unterschiedliche Lebensmittel, Gewürze oder dgl. nur bedingt verwenden lässt, nämlich aufgrund der Tatsache, dass es bislang nur möglich war, die Vorrichtung bzw. Mühle, wie auch immer, ein- oder auszuschalten. Eine Anpassung des elektrischen Antriebs und somit der Drehzahl/Drehgeschwindigkeit des Zerkleinerungswerks auf das jeweilige Mahlgut ist bislang nicht möglich gewesen. Außerdem war es nicht möglich, der gattungsbildenden Vorrichtung Funktionseinheiten mit weiteren Funktionen zuzuordnen, die auf intelligente Weise aktivierbar bzw. deaktivierbar sind. Folglich war der Bedienungskomfort der gattungsbildenden Vorrichtungen begrenzt.

In erfindungsgemäßer Weise umfasst die Vorrichtung einen Prozessor, nämlich einen miniaturisierten Prozessor, der bevorzugt als Chip mit einer kleinen zentralen Recheneinheit integriert ist. Der Prozessor dient zur Steuerung des Antriebs und ggf. zur Steuerung weiterer Funktionen bzw. Funktionseinheiten. Mit anderen Worten umfasst die erfindungsgemäße Vorrichtung eine elektronische Intelligenz durch Realisierung einer digitalen Auslegung, nämlich dahingehend, dass entsprechend der vorgegebenen Programmierung des Prozessors bzw. Chips unterschiedlichste Funktionen aktivierbar bzw. deaktivierbar sind, je nach Ausstattung der Vorrichtung und nach dem Prozessor zugeführten Eingangssignalen.

So lässt sich beispielsweise das Anlaufverhalten des als Antrieb dienenden Elektromotors definieren, nämlich in Abstimmung auf das jeweilige Mahlgut, so dass eine optimale Anpassung an das Mahlgut möglich ist. Mit den herkömmlichen Vorrichtungen müsste man zur Realisierung einer optimalen Anpassung für jedes Mahlgut und für jeden konkreten Zustand des Mahlguts eine gesonderte Vorrichtung mit entsprechend ausgelegtem Antrieb bereitstellen.

In vorteilhafter Weise ist ein Schalter, vorzugsweise ein Druckschalter, Taster oder dgl. vorgesehen, der ein Eingangssignal für den Prozessor liefert. Entsprechend aktiviert der Prozessor den elektrischen Antrieb für das Zerkleinerungswerk. Es kann eine Kennlinie vorgegeben sein, die den funktionalen Verlauf des Antriebs vorgibt. Danach ist es möglich, dass der Antrieb für das Zerkleinerungswerk zunächst kurzzeitig rückwärts drehend und danach vorwärts drehend ansteuerbar ist. Auch ist es denkbar, dass bei einem einmal aktivierten Antrieb dieser mit unterschiedlichen Drehzahlen über die Einschaltphase hinweg läuft und beispielsweise gegen Ende des Laufs langsamer, schneller oder abermals rückwärts dreht. Beliebige Kennlinien für die Beaufschlagung des Antriebs und somit für den Betrieb des Zerkleinerungswerks sind realisierbar.

In weiter vorteilhafter Weise ist es möglich, mindestens einen Neigungssensor vorzusehen, der bei einer vorgegebenen Neigung des Gehäuses ein Eingangssignal an den Prozessor liefert, wonach der Antrieb über einen vorgegebenen Zeitraum hinweg aktiviert wird. Im Falle einer Pfeffermühle könnte man diese zum Einschalten des Mahlwerks kurzzeitig neigen, wonach das Mahlwerk über einen vorgegebenen Zeitraum hinweg dreht. Ein quasi vollautomatischer Betrieb ist dabei möglich, und zwar ohne manuell zu betätigende Schalter.

Im Konkreten könnte der Prozessor bei einem einer Neigung von etwa 90° entsprechenden Signal des Sensors den Antrieb einschalten. Beliebig andere Neigungswinkel sind im Wege der Programmierung denkbar bzw. realisierbar. Die Einschaltdauer könnte fest vorgegeben oder frei definierbar sein.

Auch könnte ein zweiter Neigungssensor vorgesehen sein, der zum Ausschalten des Antriebs dient und der bei einer vorgegebenen Neigung des Gehäuses ein Eingangssignal an den Prozessor liefert, wonach der Antrieb ausgeschaltet wird. Auch hier könnte der Prozessor bei einem einer Neigung von etwa 90° entsprechenden Signal des zweiten Sensors den Antrieb ausschalten.

Ungeachtet der Frage, ob zum Ein- und Ausschalten ein oder zwei Neigungssensoren vorgesehen sind, könnte der das Einschalten bewirkende Neigungssensor eine Art Erschütterungsschutz, beispielsweise im Sinne einer Zeitverzögerung bzw. Trägheit, umfassen, so dass gewährleistet ist, dass der Antrieb nicht etwa beim Auftreten durch den Mahlvorgang hervorgerufener Erschütterungen - ungewollt - ausgeschaltet wird. Eine entsprechende Trägheit soll dafür sorgen, dass ein ungewolltes ständiges Ein- und Ausschalten des Antriebs wirksam vermieden ist.

Wesentlich ist jedenfalls, dass über den Prozessor eine digitale Auslegung der Vorrichtung realisiert ist, wodurch wiederum eine intelligente Steuerung des Antriebs und somit des Zerkleinerungswerks möglich ist, so dass eine optimale Anpassung der Vorrichtung an das jeweils zu zerkleinernde Gut erfolgen kann.

In weiter vorteilhafter Weise dient der Sensor bzw. dienen die Sensoren unter anderem auch zum Ein- und Ausschalten einer direkten oder indirekten Beleuchtung, vorzugsweise in Richtung des zerkleinerten und ausgeworfenen Guts. Im Falle der Anwendung bei einer Pfeffer- oder Salzmühle lässt sich durch die Beleuchtung einerseits das ausgeworfene Mahlgut und andererseits die zu würzende Speise beleuchten, so dass sich die Vorrichtung insbesondere auch bei schwacher Beleuchtung optimal verwenden lässt.

Dabei könnte der Prozessor derart programmiert sein, dass die Beleuchtung beim Ausschalten oder über einen entsprechenden Schalter dimmbar ist. Auch durch diese Maßnahme ist ein weiterreichender Bedienungskomfort geschaffen.

Des Weiteren ist es von Vorteil, wenn mindestens ein Bewegungssensor vorgesehen ist, der bei detektierter Bewegung dem Prozessor ein Eingangssignal liefert, wonach der Prozessor die Betriebsbereitschaft des Antriebs und ggf. weiterer Funktionseinheiten vorbereitet bzw. realisiert und ggf. anzeigt. Zum Anzeigen der Betriebsbereitschaft kann ein Leuchtmittel vorgesehen sein, beispielsweise eine oder mehrere Dioden. Das Leuchtmittel könnte als solches eine punktartige Lichtquelle darstellen. Ebenso ist es denkbar, dass das Leuchtmittel zum Beleuchten des Gehäuses, beispielsweise einer aus Acryl bestehenden Gehäusewandung, dient. Eine in sich leuchtende Gehäusewandung würde in einem solchen Fallen die Betriebsbereitschaft signalisieren, wodurch sich obendrein ein beachtlicher optischer Effekt ergibt.

Des Weiteren ist es denkbar, dass die Anzeige der Betriebsbereitschaft nach einer vorgegebenen Zeit, vorzugsweise nach 10 bis 20 Sekunden, erlischt. Dies impliziert die Beendigung der Betriebsbereitschaft, nämlich abermals durch ein im Prozessor vorgegebenes Programm.

In weiter vorteilhafter Weise ist ein Schalter, vorzugsweise ein S/P-Schalter, vorgesehen, wonach über den Prozessor eine Änderung der Drehrichtung und/oder der Drehgeschwindigkeit des Antriebs und somit des Zerkleinerungswerks steuerbar ist. Entsprechend lässt sich die Drehrichtung und/oder die Drehgeschwindigkeit des Antriebs verändern, um nämlich abermals der Beschaffenheit des zu zerkleinernden Guts Rechnung zu tragen. Eine optimale Anpassung an das jeweilige Gut ist möglich. Der Zerkleinerungs-/Mahlvorgang lässt sich dadurch abermals optimieren.

Im Konkreten ist es denkbar, dass vorzugsweise über einen auf den Prozessor wirkenden Schalter die anfängliche Drehrichtung und/oder die Drehgeschwindigkeit an verschiedenes Zerkleinerungsgut anpassbar ist. Somit ließe sich die gleiche Vorrichtung für unterschiedliches Zerkleinerungsgut verwenden, wobei der Anwender über die Betätigung des Schalters die Anpassung vornehmen kann.

In weiter vorteilhafter Weise ist ein Verschluss für das Zerkleinerungswerk vorgesehen, nämlich im Bereich der Auswurföffnung, auf der dem Speicher abgewandten Seite des Zerkleinerungswerks. Beliebige Verschlussmechanismen sind verwendbar, wobei beispielsweise ein blendenartiger Verschluss realisierbar ist. Dieser Verschluss lässt sich, ebenfalls über den Prozessor gesteuert, während oder nach dem Ausschalten des Antriebs betätigen, so dass ein unbeabsichtigter Auswurf des im Zerkleinerungswerk verbliebenen Zerkleinerungsguts wirksam verhindert wird. Der Verschlussmechanismus kann über den Prozessor automatisch nach dem Ausschalten des Antriebs betätigt bzw. geschlossen und beim oder vor dem Einschalten des Antriebs geöffnet werden.

Ebenso ist es denkbar, dass über den Prozessor der Ladezustand der Stromversorgung, nämlich einer Batterie oder eines Akkus, überwacht wird, und dass bei Unterschreiten eines vorgegebenen Schwellwerts ein optisches und/oder akustisches Signal ausgelöst wird. Auch ist es denkbar, dass ein hinreichend guter Ladezustand optisch angezeigt wird. Jedenfalls wird auch hier der Bedienungskomfort ganz erheblich erhöht, wenn nämlich der Ladezustand dahingehend überwacht wird, dass das Signal zwar das Unterschreiten des vorgegebenen Schwellwerts anzeigt, dass dabei jedoch ein ordnungsgemäßer Betrieb der Vorrichtung immer noch möglich ist.

In Bezug auf den konkreten Einsatz der Vorrichtung sei angemerkt, dass hier jedwede geeigneten Lebensmittel, Gewürze oder dgl. zerkleinert werden können. Im Konkreten kann es sich bei dem Zerkleinerungswerk um ein Mahlwerk handeln, vorzugsweise zum Mahlen von Pfeffer, Salz oder sonstigen Gewürzen. Auch weiche Lebensmittel lassen sich mit der erfindungsgemäßen Vorrichtung, unter Nutzung eines Prozessors, zerkleinern, wonach es sich nämlich bei dem Zerkleinerungswerk um einen Hobel, Schaber oder dgl. handeln kann, vorzugsweise zum Zerkleinern bzw. Hobeln von Käse. Die Realisierung der erfindungsgemäßen Idee bedeutet jedenfalls keine Einschränkung auf die konkrete Anwendung.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: eine schematische Ansicht einer erfindungsgemäßen Vorrichtung am Beispiel einer Pfeffer-/Salzmühle mit Ein-/Ausschalter und
- Fig. 2: in einer schematischen Ansicht die funktionale Einbindung des Prozessors zur Steuerung des Antriebs und weiterer Funktionseinheiten.

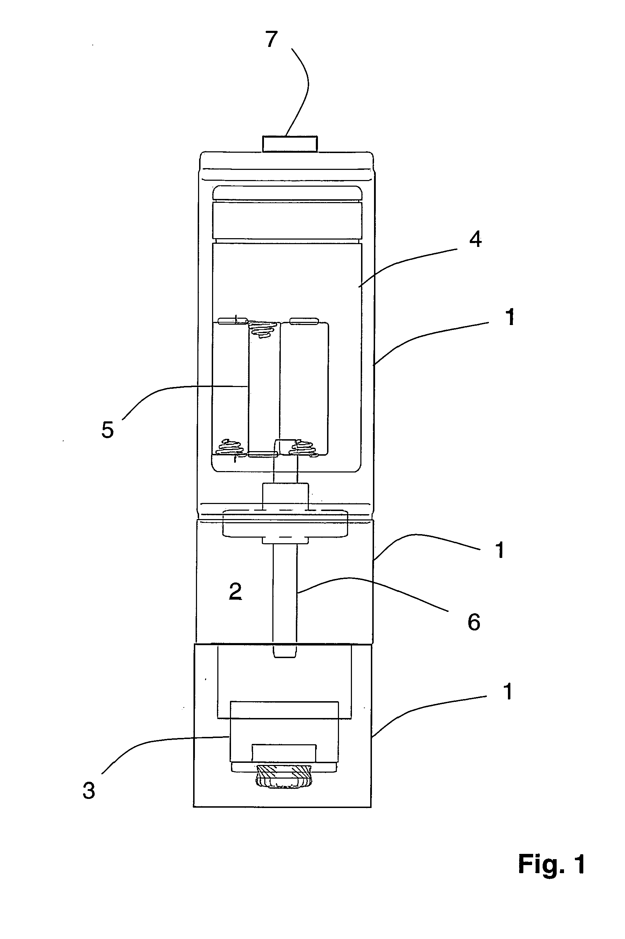

Fig. 1 zeigt in einer schematischen Ansicht eine Pfeffer-/Salzmühle mit einem Gehäuse 1 und einem in dem Gehäuse 1 ausgebildeten Speicher 2 zur Bereitstellung des zu zerkleinernden Guts, welches in der Figur nicht gezeigt ist. Des Weiteren ist ein auf das Gut wirkendes Zerkleinerungswerk vorgesehen, welches fortan als Mahlwerk 3 bezeichnet wird. Ein elektrischer Antrieb 4 ist im oberen Bereich des Gehäuses 1 angeordnet, und zwar ggf. unter Zwischenschaltung eines Getriebes 5. Dabei kann es sich in vorteilhafter Weise um ein Planetengetriebe mit entsprechender Unter-/Übersetzung handeln.

Fig. 1 zeigt des Weiteren, dass der elektrische Antrieb 4 über eine Welle 6 das Mahlwerk 3 zur Drehung antreibt. Die Welle 6 erstreckt sich durch den Speicher 2 hindurch und dient insbesondere bei eckiger bzw. kantiger Ausgestaltung u.a. auch zum Rühren bzw. Bewegen und auch Mischen des Mahlguts.

Bei dem in Fig. 1 gezeigten Ausführungsbeispiel wird der elektrische Antrieb 4 über einen Taster 7 aktiviert, der auf einen in Fig. 1 nicht gezeigten Prozessor 8 wirkt.

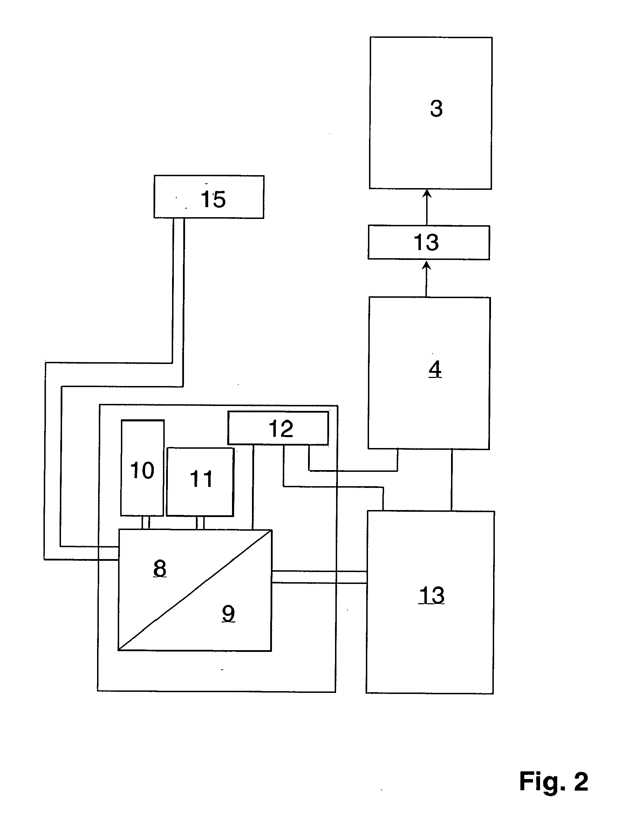

Fig. 2 zeigt im Rahmen eines Blockschaltbildes die Integration des Prozessors 8 in die Elektrik/Elektronik der gesamten Vorrichtung. Der Prozessor 8 umfasst eine miniaturisierte zentrale Recheneinheit 9, die mit einer entsprechenden Programmierung ausgestattet ist. Die Programmierung kann zahlreiche Optionen umfassen, nämlich einerseits zum Antrieb des Mahlwerks 3 und andererseits zur Steuerung unterschiedlichster Funktionen, beispielsweise zum Dimmen einer Beleuchtung 15, zur Vorgabe der Beleuchtungszeit oder Aktivierungszeit des Mahlwerks 3, etc. Die zentrale Recheneinheit 9 erhält jedenfalls über eine Sensorik Eingangssignale, beispielsweise über einen Neigungssensor 10 oder über einen Bewegungssensor 10. Dabei ist es nicht erforderlich, das Mahlwerk 3 über einen Schalter zu aktivieren, zumal die Aktivierung über den Neigungssensor 10 erfolgen kann.

Der Prozessor 8 wie auch ein elektrischer bzw. elektronischer Schalter 12 und der elektrische Antrieb 4 werden über eine Batterie 13 oder über einen entsprechenden Akkumulator gespeist. Der elektrische Antrieb 4 wirkt über ein Getriebe, vorzugsweise über ein Planetengetriebe 14, auf das Mahlwerk 3.

Außerdem ist eine Beleuchtung 15 vorgesehen, die einerseits den Ladezustand der Batterie 13 oder die Bereitschaft der gesamten Vorrichtung oder zur Beleuchtung des ausgeworfenen Mahlguts dienen kann.

Schließlich sei angemerkt, dass das voranstehend erörterte Ausführungsbeispiel lediglich zur beispielhaften Erörterung der beanspruchten Lehre dient, diese jedoch nicht auf das Ausführungsbeispiel einschränkt.

## Patentansprüche

1. Vorrichtung zum Zerkleinern von Lebensmitteln, Gewürzen oder dgl., mit einem Gehäuse (1), einem in dem Gehäuse (1) ausgebildeten Speicher (2) zur Bereitstellung des zu zerkleinernden Guts, einem auf das Gut wirkenden Zerkleinerungswerk (3) und einem elektrischen Antrieb (4), **gekennzeichnet durch** einen Prozessor (8) zur Steuerung des Antriebs (4) und ggf. weiterer Funktionen bzw. Funktionseinheiten.

2. Vorrichtung nach Anspruch 1, **dadurch gekennzeichnet, dass** ein Schalter, vorzugsweise ein Druckschalter, Taster (7) oder dgl. vorgesehen ist, der ein Eingangssignal für den Prozessor (8) liefert, wonach der Prozessor (8) den Antrieb (4) für das Zerkleinerungswerk (3) aktiviert.

3. Vorrichtung nach Anspruch 1 oder 2, **dadurch gekennzeichnet, dass** der Prozessor (8) derart programmiert ist, dass der Antrieb (4) für das Zerkleinerungswerk (3) kurzzeitig rückwärts drehend und danach vorwärts drehend ansteuerbar ist.

4. Vorrichtung nach einem der Ansprüche 1 bis 3, **dadurch gekennzeichnet, dass** mindestens ein Neigungssensor (10) vorgesehen ist, der bei einer vorgegebenen Neigung des Gehäuses (1) ein Eingangssignal an den Prozessor (8) liefert, wonach der Antrieb (4) über einen vorgegebenen Zeitraum aktiviert wird, wobei
der Prozessor (8) bei einem einer Neigung von etwa 90° entsprechenden Signal des Sensors (10) den Antrieb (4) einschaltet kann und/oder wobei
ein zweiter Neigungssensor (10) vorgesehen sein kann, der zum Ausschalten dient und der bei einer vorgegebenen Neigung des Gehäuses (1) ein Eingangssignal an den Prozessor (8) liefert, wonach der Antrieb (4) ausgeschaltet wird, wobei
der Prozessor (8) bei einem einer Neigung von etwa 90° entsprechenden Signal des zweiten Sensors (10) den Antrieb (4) ausschalten kann.

5. Vorrichtung nach Anspruch 4, **dadurch gekennzeichnet, dass** der Sensor (10) bzw. die Sensoren zum Ein- und Ausschalten einer direkten oder indirekten Beleuchtung, vorzugsweise in Richtung des zerkleinerten und ausgeworfenen Zerkleinerungsguts, dient bzw. dienen.

6. Vorrichtung nach Anspruch 5, **dadurch gekennzeichnet, dass** der Prozessor (8) derart programmiert ist, dass die Beleuchtung beim Ausschalten oder über einen entsprechenden Schalter (12) dimmbar ist.

7. Vorrichtung nach einem der Ansprüche 1 bis 6, **dadurch gekennzeichnet, dass** mindestens ein Bewegungssensor (11) vorgesehen ist, der bei detektierter Bewegung dem Prozessor (8) ein Eingangssignal liefert, wonach der Prozessor (8) die Betriebsbereitschaft des Antriebs (4) und ggf. weiterer Funktionseinheiten vorbereitet und ggf. anzeigt, wobei
zum Anzeigen der Betriebsbereitschaft ein Leuchtmittel (15), beispielsweise eine Diode, vorgesehen sein kann.

8. Vorrichtung nach Anspruch 7, **dadurch gekennzeichnet, dass** das Leuchtmittel (15) zum Beleuchten des Gehäuses (1), beispielsweise einer aus Acryl bestehenden Gehäusewandung, dient.

9. Vorrichtung nach Anspruch 7 oder 8, **dadurch gekennzeichnet, dass** der Prozessor (8) derart programmiert ist, dass die Anzeige der Betriebsbereitschaft nach einer vorgegebenen Zeit, vorzugsweise nach 10 bis 20 Sekunden, erlischt.

10. Vorrichtung nach einem der Ansprüche 1 bis 9, **dadurch gekennzeichnet, dass** ein Schalter (12), vorzugsweise ein S/P-Schalter, vorgesehen ist, wonach über den Prozessor (8) eine Änderung der Drehrichtung und/oder der Drehgeschwindigkeit des Antriebs (4) und somit des Zerkleinerungswerks (3) steuerbar ist.

11. Vorrichtung nach einem der Ansprüche 1 bis 10, **dadurch gekennzeichnet, dass** vorzugsweise über einen auf den Prozessor (8) wirkenden Schalter (12) die anfängliche Drehrichtung und/oder die Drehgeschwindigkeit an verschiedenartiges Zerkleinerungsgut (3) anpassbar ist.

12. Vorrichtung nach einem der Ansprüche 1 bis 11, **dadurch gekennzeichnet, dass** der Prozessor (8) während oder nach dem Ausschalten des Antriebs (4) einen Verschluss für das Zerkleinerungswerk (3) betätigt.

13. Vorrichtung nach einem der Ansprüche 1 bis 12, **dadurch gekennzeichnet, dass** über den Prozessor (8) der Ladezustand einer Batterie (13) oder eines Akkus überwacht wird und dass bei Unterschreiten eines vorgegebenen Schwellwertes ein optisches und/oder akustisches Signal ausgelöst wird.

14. Vorrichtung nach einem der Ansprüche 1 bis 13, **dadurch gekennzeichnet, dass** es sich bei dem Zerkleinerungswerk (3) um ein Mahlwerk handelt, vorzugsweise zum Mahlen von Pfeffer oder Salz.

15. Vorrichtung nach einem der Ansprüche 1 bis 14, **dadurch gekennzeichnet, dass** es sich bei dem Zerkleinerungswerk (3) um einen Hobel, Schaber oder dgl. handelt, vorzugsweise zum Zerkleinern bzw. Hobeln von Käse.
